# EUROPEAN PATENT SPECIFICATION

(11) **EP 4 548 153 B1**
(45) Date of publication and mention of the grant of the patent: **09.12.2026**
(21) Application number: 23736441.9
(22) Date of filing: 20.06.2023
(51) Int. Cl.: G02F 1/00, G02B 6/12, G02F 3/00, G06N 10/40, G02B 6/122, B82Y 20/00, G02B 6/132, G02B 6/136

(54) **ELECTRO-OPTICAL COMPONENT**
ELEKTROOPTISCHES BAUTEIL
COMPOSANT ÉLECTRO-OPTIQUE

(30) Priority: 01.07.2022 GB 202209709
(43) Date of publication of application: 07.05.2025
(73) Proprietor: University of Salford, Salford M5 4WT (GB)
(72) Inventor: HUGHES, Mark, Salford, M5 4WT (GB)
(74) Representative: Scintilla Intellectual Property Ltd
(86) International application number: PCT/GB2023/051613
(87) International publication number: WO 2024/003528

(56) References cited:
- WO-A1-01/20379
- US-A1- 2017 261 770

## Description

### Technical Field of the Invention

The present invention relates to a means of connecting quantum computers. In particular, to providing a coherent interface between photonic and superconducting quantum computers.

### Background to the Invention

It has previously been shown in "Coupling of Erbium-Implanted Silicon to a Superconducting Resonator, Physical Review Applied 16, 034006 (2021)" that the spin state of erbium implanted into silicon can couple to a superconducting resonator, and in "Optically modulated magnetic resonance of erbium implanted silicon. Scientific Reports, 9, 19031 (2019)" that 1550 nm light can modulate the spin state of erbium implanted into silicon; this shows that erbium implanted silicon can be used to couple 1550 nm photons to superconducting resonators. Such coupling will allow for interfacing between photonic and superconducting quantum computers because the superconducting circuits of superconducting quantum computers can coherently couple to superconducting resonators; however, superconducting resonators are sensitive to optical photons which may cause localised loss of the superconducting properties which would adversely affect the superconducting resonator.

WO01/20379 A1 describes a light transfer device that includes a first light pathway having a first input and a first output and a second light pathway having a second output. The second light pathway is coupled to the first light pathway, and light from the first input is transferable between the first and second light pathways. An active medium is positioned along one of the first and second light pathways, the active medium is capable of receiving optical energy that modifies the active medium so that the active medium controls the transfer of light between the first and second pathways.

US2017/261770 A1 describes transducers and methods of making the same include a substrate having a cavity with a diameter that supports whispering gallery modes at a frequency of an input signal. A focusing structure in the cavity focuses the electric field of the input signal. A resonator directly under the focusing structure has a crystalline structure that generates an electro-optic effect when exposed to electrical fields. An electric field of the input signal modulates an output signal in the resonator via the electro-optic effect.

It is an aim of an embodiment or embodiments of the invention to overcome or at least partially mitigate one or more problems with the prior art and/or to provide an improved optical to microwave coupling.

### Summary of the Invention

According to a first aspect of the invention there is provided an electro-optical component, the electro-optical component comprising an erbium and oxygen implanted silicon waveguide and a superconducting microwave resonator wherein a blocking layer of opaque material is arranged between the waveguide and microwave resonator and wherein the microwave resonator is coherently coupled to spin states of the erbium.

Optionally, wherein the optically opaque material is InSb.

Optionally wherein the blocking layer comprises two layers of different materials.

Optionally, wherein the first layer compromises a reflective metal.

Optionally, wherein the second layer comprises an electrical insulator.

Optionally, wherein the blocking layer has a thickness of between 5nm and 500nm.

Advantageously, the provision of a blocking layer of opaque material between the waveguide and microwave resonator ensures that photons directed through the waveguide are not absorbed by the superconducting components, thereby avoiding the formation of localised non-superconducting regions which would be detrimental to the operation of the device.

The blocking layer may be comprised of an optically opaque material. The blocking layer may be electrically insulating at 10 to 200 mK. The optically opaque material may be opaque to 1550 nm light. The blocking layer may be a narrow bandgap semiconductor, preferably, with a bandgap less than 0.8eV. The narrow bandgap semiconductor may be InSb. The narrow bandgap semiconductor may be GaSb. The blocking layer may have a thickness of between 5 nm and 500 nm, for example, between 5nm and 100nm, preferably between 20 and 40nm, more preferably 30nm.

Advantageously, the blocking layer ensures that optical photons from the optical portion of the device do not reach the microwave resonator. Use of InSb as the blocking layer is advantageous as it is opaque to 1550 nm photons and has a low electrical conductivity at the operating temperature of the device. The blocking layer cannot however be too thick as this would be detrimental to the coherent coupling of the states in the waveguide and microwave resonator.

Alternatively, the blocking layer may be comprised of two layers. The first layer may comprise a reflective metal or alloy thereof, for example gold. The second layer may comprise an electrical insulator, for example Al2O3.

A blocking layer comprised of two layers is advantageous as materials can be selected which have superior properties in one of the characteristics desired in the blocking layer. For example, a gold layer may be superior at blocking 1550nm photon from passing from the optical waveguide to the microwave resonator but is not electrically insulating. Al2O3 on the other hand may be a superior electrical insulator but is not suitable for blocking 1550 nm photons. By using layers of each material, a superior blocking layer is achieved.

The silicon waveguide may be arranged on a silicon oxide layer. The silicon oxide layer may be arranged on a silicon layer. The waveguide may have a height of between 100 nm and 1000 nm, for example between 100 nm and 500 nm, preferably between 200 nm and 400 nm, i.e. 300 nm. The waveguide may have a width of between 200 nm and 2000 nm, for example between 300 nm and 1000 nm, preferably between 400 nm and 600 nm, i.e. 500 nm.

The waveguide may define a path comprising a plurality of parallel lines. There may be between 3 and 30 parallel lines. The parallel lines may have a length of between 50 µm and 1000 µm. The parallel lines may be connected by curved portions. The curved portions may comprise 180 degree turns. The turns may have a bend radius of between 1 µm and 30 µm, for example between 1 µm and 10 µm, preferably between 3 µm and 8 µm, i.e. 5 µm.

The superconducting resonator may be comprised of niobium nitride.

According to a second aspect of the invention there is provided a method of producing an electro-optical component, the method comprising: providing a silicon substrate; implanting the silicon substrate with erbium and oxygen; annealing the silicon substrate; defining at least one optical waveguide on the silicon substrate; depositing a blocking layer of opaque material over the waveguide; fabricating a superconducting resonator structure on the blocking layer.

The silicon substrate may be a silicon-on-insulator substrate. The silicon substrate may comprise a silicon base layer, a silicon oxide layer and silicon surface layer.

The waveguide may be defined from the silicon surface layer. The waveguide may have a thickness of between 100 nm and 1000 nm, for example between 200 nm and 600 nm, preferably between 250 nm and 350 nm. The waveguide may have a thickness of 300 nm. The waveguide may have a width of between 200nm and 2000nm, for example between 250 nm and 750 nm, preferably between 400 nm and 600 nm, more preferably 500 nm.

The erbium may be implanted before the oxygen. The erbium may be implanted using ion implantation. The erbium may be implanted at energies of between 20 keV and 4000 keV, for example 20 keV to 2000 keV, preferably between 40 keV and 1500 keV, more preferably between 50 keV and 1300 keV. The erbium may have an average concentration of between 1x10¹⁴ cm⁻³ and 1x10¹⁹ cm⁻³, for example between 1x10¹⁶ cm⁻³ and 1x10¹⁸ cm⁻³, preferably 1x10¹⁷ cm⁻³. The oxygen may be implanted at energies of between 5 keV and 300 keV, preferably between 5 keV and 200 keV, more preferably between 10 keV and 150 keV. The oxygen may have an average concentration of between 1x10¹⁵ cm⁻³ and 1x10²⁰ cm⁻³, for example between 1x10¹⁸ cm⁻³ and 1x10²⁰ cm⁻³, preferably 1x10¹⁹ cm⁻³.

The annealing step may comprise heating the silicon substrate to a first temperature for a first period of time. The annealing step may comprise heating the silicon substrate to a second temperature for a second period of time. The annealing step may comprise heating the silicon substrate to a third temperature for a third period of time. The second temperature may be higher than the first temperature. The third temperature may be higher than the second temperature.

The first temperature may be between 400 °C and 500 °C, preferably between 425 °C and 575 °C, more preferably 450 °C. The first time period may be between 20 and 60 minutes, for example between 20 and 40 minutes, preferably between 25 and 35 minutes, more preferably 30 minutes. The second temperature may be between 550 °C and 650 °C, preferably between 600 °C and 640 °C, more preferably 620 °C. The second time period may be between 120 and 300 minutes, for example between 120 and 240 minutes, preferably between 160 and 200 minutes, more preferably 180 minutes. The third temperature may be between 700 °C and 1000 °C, preferably between 800 °C and 900 °C, more preferably 850 °C. The third time period may be between 10 and 100 seconds, for example between 10 and 50 seconds, preferably between 20 and 40 seconds, more preferably 30 seconds.

The blocking layer may be comprised of an optically opaque material. The optically opaque material may be opaque to 1550 nm light. The blocking layer may be a narrow bandgap semiconductor. The narrow bandgap semiconductor may be InSb. The blocking layer may have a thickness of between 5 nm and 500 nm, for example, between 5nm and 100nm, preferably between 20 and 40nm, more preferably 30nm.

The blocking layer may be deposited in two steps. The first deposition of the blocking layer may have a thickness approximately equal to the height of the waveguide. The second deposition of the blocking layer may have a thickness of between 5 nm and 500 nm, for example 10 nm to 100 nm, preferably 20 nm to 40 nm, more preferably 30 nm. The first deposition may be subject to chemical-mechanical planarization prior to deposition of the second layer.

The superconducting resonator may be comprised of niobium nitride.

According to a third aspect of the invention there is provided a quantum interface apparatus comprising the electro-optical component of the first aspect of the invention, including any optional features thereof, and further comprising a superconducting quantum computer and a photonic quantum computer; wherein the superconducting quantum computer is operably coupled to the superconducting resonator and the qubits of the photonic quantum are comprised of photons in the waveguide.

The device thereby allows photonic quantum computers to be coherently interfaced with super conducting quantum computers allowing a hybrid system to take advantage of the strengths of both types. For example, superconducting quantum computers currently have higher flexibility in how gate operations can be programmed, but photonic quantum computers can potentially have much lower stochastic noise levels.

### Detailed Description of the Invention

In order that the invention may be more clearly understood one or more embodiments thereof will now be described, by way of example only, with reference to the accompanying drawings, of which:
- Figure 1: is a schematic cross section of an embodiment of an electro-optical component in accordance with the invention;
- Figure 2: is a plan view of the waveguide of the electro-optical component of Figure 1;
- Figure 3: is a plan view of the resonator of the electro-optical component of Figure 1;
- Figures 4a-f: are schematic cross sections of an embodiment of the method of producing an electro-optical component in accordance with the invention.
- Figure 5: is a schematic cross section of an embodiment of an electro-optical component in accordance with the invention;
- Figures 6a-d: are schematic cross sections of an embodiment of the method of producing an electro-optical component in accordance with the invention.

The one or more embodiments are described above by way of example only. Many variations are possible without departing from the scope of protection afforded by the appended claims.

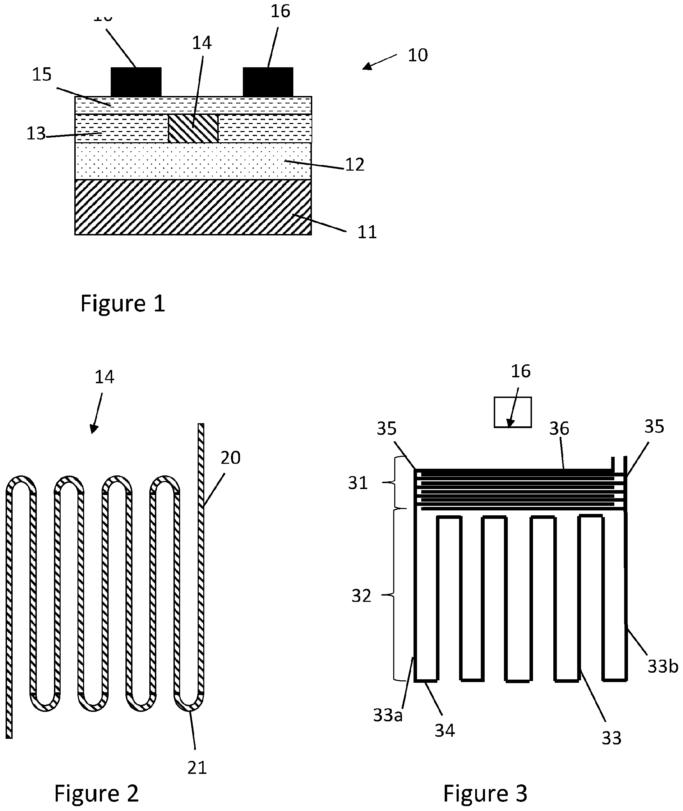

Figure 1 shows a schematic cross section of an electro-optical component 10 according to the present invention. The electro-optical component comprises a silicon layer 11, on top of which is arranged a layer of silicon oxide 12 to provide a refractive index contrast layer. Arranged on top of the silicon oxide layer 12 is a first layer of InSb 13. Embedded in the first layer of InSb 13 and also arranged on top of the silicon dioxide layer 12 is an erbium and oxygen implanted silicon waveguide 14. In some embodiments the waveguide 14 and InSb 13 may be arranged directly on the silicon layer 11. The waveguide 14 and first layer of InSb 13 are covered by a second InSb layer 15 the second InSb layer 15 provides a blocking layer. Arranged on top of the second InSb layer 15 is a niobium nitride superconducting resonator 16.

By providing a layer of InSb 15 between the waveguide 14 and superconducting resonator 16, photons which escape the waveguide 14 are blocked from hitting the superconducting resonator 16. As will be appreciated by those skilled in the art, other materials, such as other narrow bandgap semiconductors, can be used to provide the blocking layer between the waveguide 14 and superconducting resonator 16, so long as they are optically opaque to light with a wavelength in the region of 1550 nm as used in the waveguide 14.

With reference to figures 1 and 2, the structure of the waveguide 14 is expanded upon. The waveguide 14 is formed from a layer of silicon which has been implanted with erbium and oxygen to form erbium oxygen centres. The waveguide 14 has a rectangular cross section with a height of 300 nm and a width of 500nm. Figure 2 shows the path the waveguide 14 traces over the silicon oxide layer 12 as viewed from above. The path comprises nine parallel linear portions 20 each with a length of 300 µm with a separation of 10 µm between each portion. Adjacent portions 20 are connected by 180 degree turns 21 with bend radii of 5 µm, the turns 21 are on alternating ends of the linear portions such that the individual parts form a single meandering path.

With reference to figures 1 and 3, the structure of the superconducting resonator 16 is expanded upon. The superconducting resonator 16 is comprised of niobium nitride and has a rectangular cross section with a height of 100 nm and a width of 1000 nm. Figure 3 shows the footprint of the resonator 16 on the second InSb layer 15 as viewed from above. The resonator comprises a lumped capacitor portion 31 and a coupling portion 32.

In this this embodiment niobium nitride (NbN) is used as the superconductor, but other materials could be used such as Al and Nb. The cross section of individual channels of the superconducting resonator have a height of 100 nm and a width of 1000nm. In this embodiment the coupling portion 32 of the superconducting resonator comprises ten parallel tracks 33 approximately 250 µm long and separated by a distance of approximately 30 µm. Adjacent tracks are connected at alternating ends by straight connecting portions 34 arranged at 90 degrees to the parallel tracks 33. The outer most tracks 33a,b have a greater linear extent, extending beyond the coupling portion 32 by approximately 50 µm. Projecting from each of these extensions 35 are five additional tracks 36. The additional tracks 36 are arranged at 90 degrees to the extensions 35 and are directed towards the opposite extension. The additional tracks 36 are neighboured by the tracks extending from the opposite extension such that they alternate and form the lump capacitor 31.

Those skilled in the art will appreciate that the exact geometry of superconducting resonator can be varied to meet the needs of coupling to the superconducting quantum computer. For example, the lumped capacitor portion 31 can be modified to achieve the resonance frequency. The superconducting resonator and the meandering waveguide structure should have approximately the same dimensions, and the superconducting resonator should be directly on top of the meandering waveguide structure such that the erbium spins in the waveguide are "inductively coupled" to the superconducting resonator.

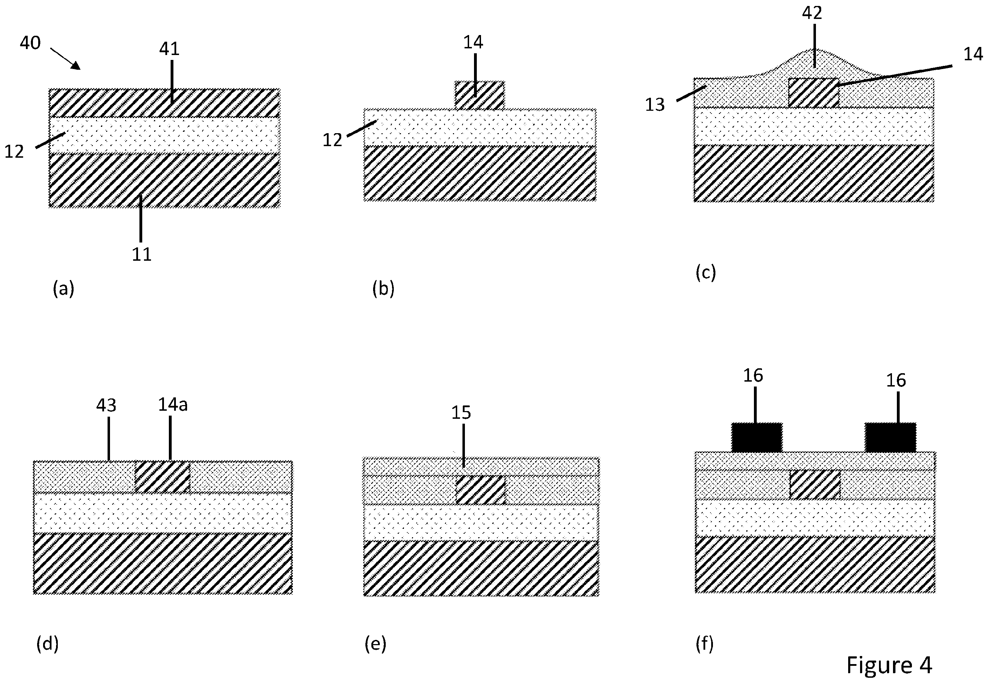

With reference to figures 4a-f a method of producing an electro-optical component according to the present invention is described. As shown in figure 4a there is provided a silicon-on-insulator (SOI) substrate 40, the substrate 40 comprises a lower silicon layer 11 and an upper silicon layer 41 with a layer of silicon oxide 12 arranged between. The substrate 40 is cooled to 77k and then using ion implantation erbium is implanted into the upper silicon layer 41 with energies of between 50 keV and 1300 keV, until an average concentration of 1x10¹⁷ cm⁻³ of erbium is achieved. The upper silicon layer 41 is then implanted with oxygen at a range of energies between 10 keV and 150 keV to an average concentration of 1×10¹⁹ cm⁻³.

The implanted SOI is then annealed at 450 °C for 30 min, then at 620 °C for 180 min, then at 850 °C for 30 s.

Referring next to figures 2 and 4b, using known photolithography and etching processes the upper silicon layer 41 is processed to form the waveguide 14. The portions of the upper silicon layer 41 which are not to form part of the waveguide are etched away completely to the oxide layer 12. The waveguide 14 traces a winding path as shown in figure 2 having the dimensions noted above.

As shown in figure 4c and d, a first layer of InSb 13 is then deposited to a thickness of 500 nm. As can be seen in figure 4 in the regions without the waveguide 14 this layer 13 extends beyond the height of the waveguide 14. Directly above the waveguide 14 the surface of the first InSb layer 13 is distorted and topographical features 42 are present. Such features 42 would affect any subsequent layers, for example the superconducting resonator 16, therefore a chemical-mechanical planarization process is undertaken on the device and the top portion of the first InSb layer 13 is removed until the surface 43 is approximately level with the upper surface 14a of the waveguide 14.

Following planarization, a second layer of InSb 15 is then deposited with a thickness of 30 nm as shown in figure 4e. On top of the second layer of InSb 15 a superconducting resonator 16 is deposited using known photographic techniques as shown in figures 3 and 4f, as noted above the geometry of this layer can be tailored to the specific needs of the device.

The device may undergo further processing steps to allow it to be integrated into a quantum system and/or to provide protection to the component.

In use, the device is arranged in a cryostat and cooled to a temperature that results in a low probability of thermal excitation to the first excited state of the superconducting resonator, which is typically 10 to 200 mK; a magnetic field of between 0.01 and 0.5 T is also required. The waveguide 14 is operably coupled to a source of 1550 nm light which transfers a coherent optical signal from an external photonic quantum computer (not shown). The light is absorbed by the erbium centres in the waveguide 14, and changes their spin state; the spin state of the erbium centres is coupled through the InSb layer 15 to the superconducting resonator 16, thereby allowing the coherent transfer of quantum states from optical to microwave wavelengths thereby allowing the interface a photonic quantum computer and a superconducting quantum computer.

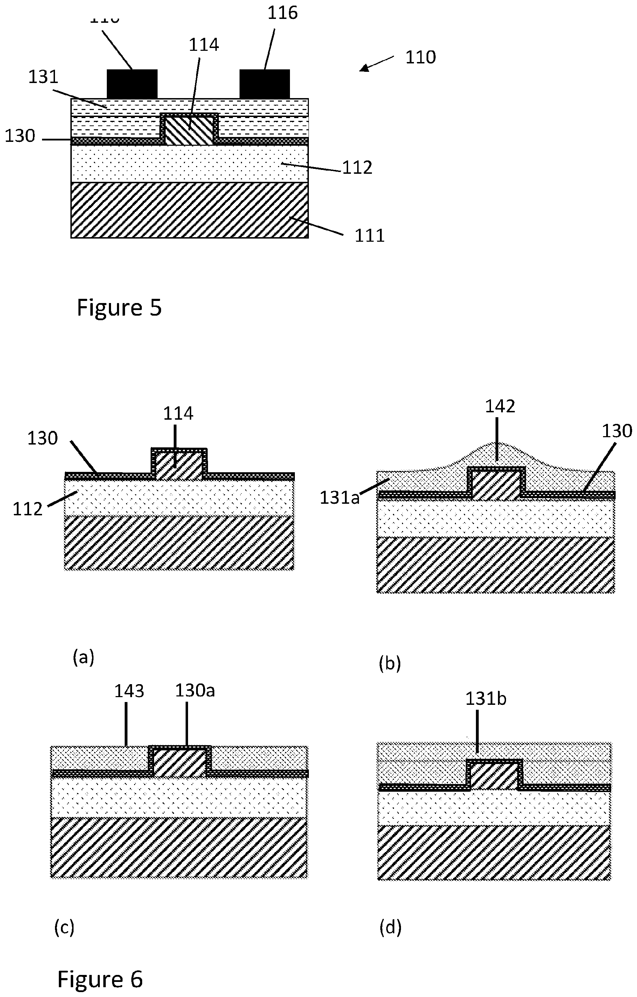

With reference to figures 5 and 6 a further electro-optical component 110 according to the present invention is described. The structure of the electro-optical component 110 broadly follows that of the electro-optical 10 with corresponding features having the same numbering, advanced by 100.

Figure 5 shows a schematic cross section of an electro-optical component 110 according to the present invention. The electro-optical component 110 comprises a silicon layer 111, on top of which is arranged a layer of silicon oxide 112 to provide an insulating layer. Arranged on top of the silicon oxide layer 112 is an erbium and oxygen implanted silicon waveguide 114. The present embodiment differs from the previous embodiment in the composition of the blocking layer. Arranged on top of the waveguide 114 and the silicon oxide layer 112 is a layer of gold 130. In some embodiments the waveguide 114 and gold may be arranged directly on the silicon layer 111. The waveguide 114 and gold layer 130 are covered by a layer of Al₂O₃ 131 the combined gold 130 and Al₂O₃ 131 layers provide a blocking layer. Arranged on top of the Al₂O₃ layer 131 is a niobium nitride superconducting resonator 116.

By providing a blocking layer of gold 130 and Al₂O₃ 131 between the waveguide 114 and superconducting resonator 116, photons which escape the waveguide 114 are blocked from hitting the superconducting resonator 116. The use of a combination of two materials is advantageous as it allows their properties to the tailored to the two functions of the blocking layer, namely to be optically opaque to light with a wavelength of 1550 nm and to be electrically insulating. The gold layer 130 blocks the light more effectively than a narrow band-gap semiconductor and the Al₂O₃ layer 131 provides superior electrical insulation. As will be appreciated by those skilled in the art, other materials, for example other metals which reflect 1550 nm could be used to replace the gold layer 130 and other insulators could be used in place of the Al₂O₃ layer 131.

The geometry of the waveguide 114 and superconducting resonator 116 are the same as that of the earlier embodiment. Again, those skilled in the art will appreciate that the exact geometry of superconducting resonator can be varied to meet the needs of coupling to the superconducting quantum computer. For example, the lumped capacitor portion 31 can be modified to achieve the desired resonance frequency. The superconducting resonator and the meandering waveguide structure should have approximately the same dimensions, and the superconducting resonator should be directly on top of the meandering waveguide structure such that the erbium spins in the waveguide are "inductively coupled" to the superconducting resonator.

With reference to figures 6 a-d a method of producing an electro-optical component 110 according to the present invention is described.

The steps up until and including the etching of the waveguide 114 are the same as those described above. In figure 6a the is shown the deposition of a layer of gold 130 in place of the first InSb layer 13. Sufficient gold is deposited so as to ensure that photons which escape the waveguide 114 cannot reach the superconducting resonator 116.

On top of the gold layer 130 a layer of Al₂O₃ 131 is deposited as shown in figure 6b and c. Directly above the waveguide 114 the surface of the Al₂O₃ layer 131 is distorted and topographical features 142 are present. Such features 142 would affect any subsequent layers, for example the superconducting resonator 116, therefore a chemical-mechanical planarization process is undertaken on the device and the top portion of the Al₂O₃ layer 131a is removed until the surface 143 is approximately level with the upper surface 130a of the gold layer 130.

Following planarization, a second layer of Al₂O₃ 131 is then deposited as shown in figure 6d. On top of the Al₂O₃ layer 131 a superconducting resonator 116 is deposited as described above

The device may undergo further processing steps to allow it to be integrated into a quantum system and/or to provide protection to the component.

The one or more embodiments are described above by way of example only. Many variations are possible without departing from the scope of protection afforded by the appended claims.

## Claims

1. An electro-optical component (10,110), the electro-optical component (10,110) comprising an erbium and oxygen implanted silicon waveguide (14,114) and a superconducting microwave resonator (16,116) wherein a blocking layer (15,115) of opaque material is arranged between the waveguide (14,114) and microwave resonator (16,116) and wherein the microwave resonator (16,116) is coherently coupled to spin states of the erbium.

2. An electro-optical component (10,110) according to claim 1 wherein the optically opaque material is InSb.

3. An electro-optical component (110) according to claim 1 or 2 wherein the blocking layer (115) comprises two layers of different materials (130,131).

4. An electro-optical component (110) according to claim 3 where in the first layer comprises a reflective metal (130).

5. An electro-optical component (110) according to any of claims 3 or 4 wherein the second layer comprises an electrical insulator (131).

6. An electro-optical component (10,110) according to any preceding claim wherein the blocking layer (15,115) has a thickness of between 5 nm and 500 nm.

7. A quantum communication apparatus comprising the electro-optical component (10,110) of any of claims 1 to 6 and further comprising a superconducting quantum computer and a photonic quantum computer; wherein the superconducting quantum computer is operably coupled to the microwave resonator (16,116) and qubits of the photonic quantum computer are comprised of photons in the waveguide (14,114).

8. A method of producing an electro-optical component (10,110), the method comprising:
- providing a silicon substrate (40);
- implanting the silicon substrate (40) with erbium and oxygen;
- annealing the silicon substrate (40);
- defining at least one optical waveguide (14,114) on the silicon substrate (40);
- depositing a blocking layer (15,130,131) of opaque material over the waveguide (14);
- fabricating a superconducting microwave resonator structure (16) on the blocking layer.

9. A method of producing an electro-optical component (10) according to claim 8 wherein the silicon substrate (40) comprises a silicon base layer (11), a silicon dioxide layer (12) and silicon surface layer (41).

10. A method of producing an electro-optical component (10) according to claim 8 or 9, wherein the erbium is implanted before the oxygen.

11. A method of producing an electro-optical component (10) according to any of claims 8 to 10 wherein the erbium is implanted at energies of between 20 keV and 4000 keV, and wherein the erbium has an average concentration of between 1x10¹⁴ cm⁻³ and 1x10¹⁹ cm⁻³.

12. A method of producing an electro-optical component (10) according to any of claims 8 to 11 wherein the oxygen is implanted at energies of between 5 keV and 300 keV.

13. A method of producing an electro-optical component (10) according to any of claims 8 to 12wherein the annealing step comprising heating the silicon substrate (40) to a first temperature for a first period of time and then a second temperature for a second period of time and then a third temperature for a third period of time; wherein the second temperature is higher than the first temperature and the third temperature is higher than the second temperature.

14. A method of producing an electro-optical component (10) according to any of claims 8 to 13 wherein the annealing step comprising heating the silicon substrate (40) to between 400 °C and 500 °C for between 20 and 60 minutes, then to between 550 °C and 650 °C for between 120 and 300 minutes and then to between 700 °C and 1000 °C for between 10 and 100 seconds.

15. A method of producing an electro-optical component (10) according to any of claims 8 to 14 wherein the resonator (16) is comprised of niobium nitride.

## Patentansprüche

1. Elektrooptisches Bauteil (10, 110), wobei das elektrooptische Bauteil (10, 110) einen Erbium- und Sauerstoff-implantierten Siliciumwellenleiter (14, 114) und einen supraleitenden Mikrowellenresonator (16, 116) umfasst, wobei eine Sperrschicht (15, 115) aus opakem Material zwischen dem Wellenleiter (14, 114) und dem Mikrowellenresonator (16, 116) angeordnet ist und wobei der Mikrowellenresonator (16, 116) kohärent an Spin-Zustände des Erbiums gekoppelt ist.

2. Elektrooptisches Bauteil (10,110) nach Anspruch 1, wobei das optisch opake Material InSb ist.

3. Elektrooptisches Bauteil (110) nach Anspruch 1 oder 2, wobei die Sperrschicht (115) zwei Schichten aus unterschiedlichen Materialien (130, 131) umfasst.

4. Elektrooptisches Bauteil (110) nach Anspruch 3, wobei die erste Schicht ein reflektierendes Metall (130) umfasst.

5. Elektrooptisches Bauteil (110) nach einem der Ansprüche 3 oder 4, wobei die zweite Schicht einen elektrischen Isolator (131) umfasst.

6. Elektrooptisches Bauteil (10,110) nach einem vorhergehenden Anspruch, wobei die Sperrschicht (15,115) eine Dicke zwischen 5 nm und 500 nm aufweist.

7. Quantenkommunikationsvorrichtung, umfassend das elektrooptische Bauteil (10, 110) nach einem der Ansprüche 1 bis 6 und ferner umfassend einen supraleitenden Quantencomputer und einen photonischen Quantencomputer; wobei der supraleitende Quantencomputer betriebsfähig an den Mikrowellenresonator (16, 116) gekoppelt ist und Qubits des photonischen Quantencomputers Photonen in dem Wellenleiter (14, 114) umfassen.

8. Verfahren zum Herstellen eines elektrooptischen Bauteils (10, 110), wobei das Verfahren Folgendes umfasst:
- Bereitstellen eines Siliciumsubstrats (40);
- Implantieren des Siliciumsubstrats (40) mit Erbium und Sauerstoff;
- Tempern des Siliciumsubstrats (40);
- Definieren mindestens eines optischen Wellenleiters (14, 114) auf dem Siliciumsubstrat (40);
- Abscheiden einer Sperrschicht (15, 130, 131) aus opakem Material über dem Wellenleiter (14);
- Herstellen einer supraleitenden Mikrowellenresonatorstruktur (16) auf der Sperrschicht.

9. Verfahren zum Herstellen eines elektrooptischen Bauteils (10) nach Anspruch 8, wobei das Siliciumsubstrat (40) eine Siliciumbasisschicht (11), eine Siliciumdioxidschicht (12) und eine Siliciumoberflächenschicht (41) umfasst.

10. Verfahren zum Herstellen eines elektrooptischen Bauteils (10) nach Anspruch 8 oder 9, wobei das Erbium vor dem Sauerstoff implantiert wird.

11. Verfahren zum Herstellen eines elektrooptischen Bauteils (10) nach einem der Ansprüche 8 bis 10, wobei das Erbium bei Energien zwischen 20 keV und 4000 keV implantiert wird und wobei das Erbium eine durchschnittliche Konzentration zwischen 1x10¹⁴ cm⁻³ und 1x10¹⁹ cm⁻³ aufweist.

12. Verfahren zum Herstellen eines elektrooptischen Bauteils (10) nach einem der Ansprüche 8 bis 11, wobei der Sauerstoff bei Energien zwischen 5 keV und 300 keV implantiert wird.

13. Verfahren zum Herstellen eines elektrooptischen Bauteils (10) nach einem der Ansprüche 8 bis 12, wobei der Schritt des Temperns Erwärmen des Siliciumsubstrats (40) auf eine erste Temperatur für einen ersten Zeitraum und dann auf eine zweite Temperatur für einen zweiten Zeitraum und dann auf eine dritte Temperatur für einen dritten Zeitraum umfasst; wobei die zweite Temperatur höher als die erste Temperatur ist und die dritte Temperatur höher als die zweite Temperatur ist.

14. Verfahren zum Herstellen eines elektrooptischen Bauteils (10) nach einem der Ansprüche 8 bis 13, wobei der Schritt des Temperns Erwärmen des Siliciumsubstrats (40) auf zwischen 400 °C und 500 °C für zwischen 20 und 60 Minuten, dann auf zwischen 550 °C und 650 °C für zwischen 120 und 300 Minuten und dann auf zwischen 700 °C und 1000 °C für zwischen 10 und 100 Sekunden umfasst.

15. Verfahren zum Herstellen eines elektrooptischen Bauteils (10) nach einem der Ansprüche 8 bis 14, wobei der Resonator (16) Niobnitrid umfasst.

## Revendications

1. Composant électro-optique (10, 110), le composant électro-optique (10, 110) comprenant un guide d'ondes en silicium implanté à l'erbium et à l'oxygène (14, 114) et un résonateur à micro-ondes supraconducteur (16, 116), une couche de blocage (15, 115) de matériau opaque étant agencée entre le guide d'ondes (14, 114) et le résonateur à micro-ondes (16, 116) et ledit résonateur à micro-ondes (16, 116) étant couplé de manière cohérente aux états de spin de l'erbium.

2. Composant électro-optique (10, 110) selon la revendication 1, ledit matériau optiquement opaque étant InSb.

3. Composant électro-optique (110) selon la revendication 1 ou 2, ladite couche de blocage (115) comprenant deux couches de matériaux différents (130, 131).

4. Composant électro-optique (110) selon la revendication 3, ladite première couche comprenant un métal réfléchissant (130).

5. Composant électro-optique (110) selon l'une quelconque des revendications 3 ou 4, ladite seconde couche comprenant un isolant électrique (131).

6. Composant électro-optique (10, 110) selon une quelconque revendication précédente, ladite couche de blocage (15, 115) possédant une épaisseur comprise entre 5 nm et 500 nm.

7. Appareil de communication quantique comprenant le composant électro-optique (10, 110) de l'une quelconque des revendications 1 à 6 et comprenant en outre un ordinateur quantique supraconducteur et un ordinateur quantique photonique ; ledit ordinateur quantique supraconducteur étant couplé fonctionnellement au résonateur à micro-ondes (16, 116) et des qubits de l'ordinateur quantique photonique étant constitués de photons dans le guide d'ondes (14, 114).

8. Procédé de production d'un composant électro-optique (10, 110), le procédé comprenant :
- la fourniture d'un substrat de silicium (40) ;
- l'implantation d'erbium et d'oxygène dans le substrat de silicium (40) ;
- le recuit du substrat de silicium (40) ;
- la définition d'au moins un guide d'ondes optique (14, 114) sur le substrat de silicium (40) ;
- le dépôt d'une couche de blocage (15, 130, 131) de matériau opaque sur le guide d'ondes (14) ;
- la fabrication d'une structure de résonateur à micro-ondes supraconducteur (16) sur la couche de blocage.

9. Procédé de production d'un composant électro-optique (10) selon la revendication 8, ledit substrat de silicium (40) comprenant une couche de base de silicium (11), une couche de dioxyde de silicium (12) et une couche de surface de silicium (41).

10. Procédé de production d'un composant électro-optique (10) selon la revendication 8 ou 9, l'erbium étant implanté avant l'oxygène.

11. Procédé de production d'un composant électro-optique (10) selon l'une quelconque des revendications 8 à 10, l'erbium étant implanté à des énergies comprises entre 20 keV et 4 000 keV, et l'erbium présentant une concentration moyenne comprise entre 1 x 10¹⁴ cm⁻³ et 1 x 10¹⁹ cm⁻³.

12. Procédé de production d'un composant électro-optique (10) selon l'une quelconque des revendications 8 à 11, l'oxygène étant implanté à des énergies comprises entre 5 keV et 300 keV.

13. Procédé de production d'un composant électro-optique (10) selon l'une quelconque des revendications 8 à 12, l'étape de recuit comprenant le chauffage du substrat de silicium (40) à une première température pendant une première période de temps, puis à une deuxième température pendant une deuxième période de temps et ensuite à une troisième température pendant une troisième période de temps ; ladite deuxième température étant supérieure à la première température et ladite troisième température étant supérieure à la deuxième température.

14. Procédé de production d'un composant électro-optique (10) selon l'une quelconque des revendications 8 à 13, l'étape de recuit comprenant le chauffage du substrat de silicium (40) entre 400°C et 500°C pendant 20 à 60 minutes, puis entre 550°C et 650°C pendant 120 à 300 minutes et ensuite entre 700°C et 1 000°C pendant 10 à 100 secondes.

15. Procédé de production d'un composant électro-optique (10) selon l'une quelconque des revendications 8 à 14, ledit résonateur (16) étant constitué de nitrure de niobium.
